(19) Europäisches Patentamt
European Patent Office
Office européen des brevets

(11) **EP 2 465 908 B1**

(12) **EUROPEAN PATENT SPECIFICATION**

(45) Date of publication and mention
of the grant of the patent:
**16.01.2013 Bulletin 2013/03**

(51) Int Cl.:
***C09J 133/00*** *(2006.01)*

(21) Application number: **11193634.0**

(22) Date of filing: **15.12.2011**

(54) **Pressure-sensitive adhesive composition and use thereof**

Druckempfindliche Klebstoffzusammensetzung und ihre Verwendung

Composition adhésive sensible à la pression et son utilisation

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.12.2010 JP 2010280857**

(43) Date of publication of application:
**20.06.2012 Bulletin 2012/25**

(73) Proprietor: **Nitto Denko Corporation
Ibaraki-shi,
Osaka 567-8680 (JP)**

(72) Inventors:
• **Ootake, Hironao**
**Ibaraki-shi Osaka 567-8680 (JP)**
• **Takahashi, Akiko**
**Ibaraki-shi Osaka 567-8680 (JP)**
• **Yamamoto, Kenichi**
**Ibaraki-shi Osaka 567-8680 (JP)**

(74) Representative: **Grünecker, Kinkeldey,
Stockmair & Schwanhäusser
Leopoldstrasse 4
80802 München (DE)**

(56) References cited:
**WO-A2-2010/124187**

**Description**

CROSS-REFERENCE

The present application claims priority based on Japanese Patent Application No. 2010-280857 filed on December 16, 2010, the contents of which are incorporated herein in its entirety by reference.

BACKGROUND OF THE INVENTION

1. Field of the Invention

The present invention relates to a pressure-sensitive adhesive (PSA) composition formed from an aqueous dispersion in which an acrylic polymer is dispersed in an aqueous solvent.

2. Description of the Related Art

Compared to a PSA composition in the form of a PSA constituent dissolved in an organic solvent (solvent-type PSA composition), a water-dispersed PSA composition in which a PSA constituent is dispersed in an aqueous medium (for instance, a PSA composition formed from emulsion in which a PSA constituent is dispersed in an aqueous medium) is desirable in terms of environmental health since water is used as the dispersion medium.

However, unlike a solvent-type composition, since a water-dispersed PSA composition is a heterogeneous system, attention must be paid to the dispersion stability thereof. For instance, if the stability (mechanical stability) of an aqueous emulsion-type PSA composition against mechanical stress (shearing force) is insufficient, emulsion particles sometimes fuse together due to the mechanical stress applied when the composition is coated, giving rise to a mass (agglomerate). The agglomerate may become a factor whereby stably coating the PSA composition is rendered difficult. In addition, the uniformity of film-thickness or the composition of the PSA layer formed from the PSA composition may be spoiled, leading to a decrease in adhesive performances, a decrease in the quality of appearance, and the like. As technical references regarding dispersion stability of water-dispersed PSA compositions, Japanese Patent Application Publication No. 2003-238932 may be cited. Japanese Patent Application Publication No. 2009-138167 is a technical reference regarding, surfactant for emulsion polymerization.

SUMMARY OF THE INVENITON

Compared to a PSA sheet using a water-dispersed PSA composition, a PSA sheet using an aqueous PSA composition is prone to having insufficient adhesive properties towards adherends such as foams having microscopic irregularities (due mainly to air cavities) on the surface (rough-surfaced adhesion property). In particular, unlike hard adherends, with a foam having elasticity (hereinafter referred to as "elastic foam") such as polyurethane foam (in particular flexible urethane foam), since the force for pressure-bonding a PSA sheet thereto is absorbed by the elastic deformation of the foam, pressure-bonding a PSA sheet to the elastic foam firmly, *per se,* is difficult. In addition, if a PSA sheet is strongly pressed against an elastic foam, the foam becomes strongly compressed (crushed), which can cause damages to the foam. In addition, depending on the strength or shape of the structure supporting the backside of the elastic foam, compressing the elastic foam between the tape and the structure sufficiently and without irregularities is difficult.

Thusly, when attempting to pressure-bond a PSA sheet to an elastic foam firmly, the bonding workability of the PSA sheet is prone to decreasing as extra force is needed to compress the elastic foam, the work demands caution, and the like. In addition, when the emphasis is on bonding workability, the adhesion reliability of the PSA sheet is prone to being insufficient. Elastic foams such as flexible urethane foams are being used broadly as a cushioning material or the like, for instance, in automobile interiors or inside household electric products, in a form that uses a two-sided PSA sheet (also known as a double-sided PSA sheet, a double-faced PSA sheet or a double-stick sheet) for immobilizing to a desired location (adherend), or bonds a single-sided PSA sheet having the elastic foam as a substrate. If the adhesion reliability of the PSA sheet is insufficient in such usage forms, an issue may arise, that the elastic foam peels-off.

The present inventors have discovered that adding a tackifier assuming a liquid state at ordinary temperatures (liquid tackifier) to a water dispersion solution of acrylic polymer in a PSA composition comprising a dispersion solution in which a PSA constituent containing an acrylic polymer is dispersed in water may be an effective technique to improve rough-surfaced adhesion properties. However, through further examinations, the addition of a liquid tackifier to a water dispersion solution of acrylic polymer was found to decrease the mechanical stability of a PSA composition. Thus, in addition to the liquid tackifier, when a surfactant was added in order to devise an improvement of the mechanical stability, water-resistance of the PSA sheet was deteriorated significantly.

The present invention was devised in view of such considerations, the main object thereof being to provide a PSA composition that is excellent in all of dispersion stability of water-dispersed PSA composition (in particular, mechanical stability), rough-surfaced adhesion property of a PSA sheet formed from the composition (in particular, bonding workability with respect to elastic foams) and water-resistance of the PSA sheet. Another object of the present invention is to provide a preparation method for the PSA. Another, related object is the provision of a PSA sheet using the PSA composition.

According to the present invention, a PSA composition is provided, comprising an aqueous dispersion solution containing an aqueous solvent and a PSA constituent dispersed in the aqueous solvent. The PSA constituent contains an acrylic polymer. The PSA constituent may additionally contain a tackifier L having a viscosity of 2000 Pa·s or lower at 30°C. Above-mentioned PSA constituent may additionally contain a surfactant S having in the molecular structure thereof an aryloxy group serving as a hydrophobic group and an anionic or non-ionic hydrophilic group. Here, the aryloxy group is a phenyloxy group having at least one (for instance, one, two or three) substituent having an aromatic ring.

According to a PSA composition having such a composition, by containing the tackifier L and the surfactant S in combination, the dispersion stability of the composition and the rough-surfaced adhesion property (for instance, adhesive property when lightly pressure-bonded to an elastic foam such as urethane foam) and water-resistance of the PSA sheet formed from the composition can both be provided at high levels. Here, aqueous solvent indicates water or a mixed solvent having water as the main constituent (a constituent occupy 50% by mass or more). Solvents other than water constituting this mixed solvent may be one, two or more species selected from various organic solvents that may mix with water homogeneously (lower alcohols and the like).

In one preferred aspect of the art disclosed herein, the hydroxyl group value of the tackifier L is 50 mg KOH/g or greater. According to a PSA composition containing such a tackifier L and the surfactant S in combination, the dispersion stability of the composition, and the rough-surfaced adhesion property and water-resistance of the PSA sheet formed from the composition can both be provided at higher levels.

With respect to 100 parts by mass of the tackifier L, the surfactant S content (the amount of active constituent, that is to say, the amount of non-volatile component (NV); *idem* hereinafter) can be 2 parts by mass to 10 parts by mass, for instance. According to a PSA composition containing such amount of surfactant S, dispersion stability and water-resistance can both be provided at higher levels.

In addition, according to the present invention, a method for preparing a PSA composition comprising an aqueous dispersion solution containing an aqueous solvent and a PSA constituent dispersed in the aqueous solvent is provided. This method comprises preparing a dispersion solution in which an acrylic polymer is dispersed in an aqueous solvent. In addition, it comprises mixing in the dispersion solution, a tackifier L having a viscosity of 2000 Pa·s or lower at 30°C and a surfactant S having an aryloxy group serving as a hydrophobic group and an anionic or non-ionic hydrophilic group. Here, the aryloxy group is a phenyloxy group having at least one (for instance, one, two or three) substituent having an aromatic ring. The PSA composition preparation method may be adopted preferably as a method for preparing any of the PSA compositions disclosed herein.

In addition, according to the specifications, a PSA sheet having a PSA layer formed from any PSA composition disclosed herein (may be a PSA composition prepared by any method disclosed herein) is provided. Such a PSA sheet may have excellent rough-surfaced adhesion property and water-resistance. In addition, since the PSA composition has a good dispersion stability, a PSA sheet using the composition may be provided with a PSA layer that is uniform and having excellent quality of appearance. In addition, since the PSA sheet is provided with a PSA layer formed from a water-dispersed PSA composition, it is desirable in terms of environmental health.

BRIEF DESCRIPTION OF THE DRAWINGS

Fig. 1 is a cross-sectional view showing schematically one constitution example of the PSA sheet;
Fig. 2 is a cross-sectional view showing schematically another constitution example of the PSA sheet;
Fig. 3 is a cross-sectional view showing schematically another constitution example of the PSA sheet;
Fig. 4 is a cross-sectional view showing schematically another constitution example of the PSA sheet;
Fig. 5 is a cross-sectional view showing schematically another constitution example of the PSA sheet;
Fig. 6 is a cross-sectional view showing schematically another constitution example of the PSA sheet;
Fig. 7 is an explanatory figure showing a method for measuring light pressure-bonding adhesive strength against an urethane foam; and
Fig. 8 is an explanatory figure showing a method for measuring light pressure-bonding adhesive strength against an urethane foam.

DETAILED DESCRIPTION OF THE INVENTION

In the following, preferred embodiments of the present invention will be described. Note that something that is other than the matters expressly referred to herein, which is something that is necessary to carry out the present invention, may be understood to be a design matter of a person of ordinary skill in the art, based on prior art in the relevant field. The present invention can be carried out based on the contents disclosed herein and the technical knowledge in the relevant field. In addition, in the following description, like reference numerals are assigned to members or sites producing like effects, and duplicated descriptions arc sometimes omitted or simplified.

The PSA composition in the art disclosed herein is an aqueous dispersion solution containing an aqueous solvent and a PSA constituent dispersed in the aqueous solvent. The PSA constituent contains an acrylic polymer. The acrylic polymer preferably occupies 40% by mass or more (typically 40% to 95% by mass) among the non-volatile components contained in the PSA composition (PSA layer forming constituents; hereafter may also be called "PSA" or "a pressure-sensitive adhesive constituent"), and more preferably occupies 50% by mass or more (typically 50% to 90% by mass, for instance 55% to 85% by mass). In addition, the proportion by mass of acrylic polymer occupied within the PSA is typically 95% by mass or lower, and in general 90% by mass or lower (for instance 85% by mass or lower) is desirable. If the proportion by mass of acrylic polymer occupied within the PSA is excessive or insufficient, PSA properties may readily become unbalanced.

An acrylic polymer having an alkyl (meth)acrylate as the main constitutive monomer constituent (monomer main component, that is to say, a constituent occupying 50% by mass or more, typically 50% to 99.8% by mass, of the total amount of monomer constituting an acrylic polymer (hereafter may be referred to as "all monomer constituents")) may be preferably adopted. In one preferred mode, the content ratio of this alkyl (meth)acrylate is 70% by mass or more (typically, 70% to 99.5% by mass) of all monomer constituents, and for instance 80% by mass or more (typically, 80% to 99.5% by mass). In addition, the content ratio of the alkyl (meth)acrylate may be 90% by mass or more (typically, 90% to 99% by mass) of all monomer constituents. Such an acrylic polymer may be synthesized by polymerization (typically, emulsion polymerization) of a given monomer raw material. In general, the monomer composition in the monomer raw material corresponds approximately to the co-polymerization composition (co-polymeric ratio) of an acrylic polymer obtained by polymerizing the monomer raw material.

Note that herein, "(meth)acrylate" is meant to indicate acrylate and methacrylate comprehensively. Similarly, meant to indicate comprehensively are, respectively, "(meth)acryloyl" for acryloyl and methacryloyl, and "(meth)acrylic" for acrylic and methacrylic.

One, two or more species selected from (meth)acrylic acid esters of alkyl alcohols with 1 to 20 carbon atoms (hereafter, such ranges of carbon atom numbers may be represented by $C_{1-20}$) can be used suitably as alkyl (meth) acrylate. In one preferred mode, 70% by mass or more (typically, 70% to 99.5% by mass) of all monomer constituents is $C_{1-14}$ alkyl (meth)acrylate, for instance $C_{1-10}$ alkyl (meth)acrylate. As concrete examples of $C_{1-10}$ alkyl (meth)acrylate, methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, t-butyl (meth)acrylate, n-pentyl (meth)acrylate, isoamyl (meth)acrylate, neopentyl (meth)acrylate, n-hexyl (meth)acrylate, n-heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth) acrylate, and the like, may be given. For instance, a monomer composition can be preferably adopted, containing one or both of butyl acrylate (BA) and 2-ethylhexyl acrylate (2EHA) for a total of 40% by mass or more (typically, 40% to 98% by mass) of all monomer constituents, and more preferably 50% by mass or more (typically, 50% to 95% by mass). When BA and 2EHA are used in combination as alkyl (meth)acrylate, there is no particular limitation on their ratio.

Other monomers that are co-polymerizable with alkyl (meth)acrylate (hereafter also referred to as "co-polymerizing monomer") may be used as optional constituents in the acrylic polymer. For instance, ethylenic unsaturated monomers having one, two or more species of functional group selected from a carboxyl group, an alkoxy silyl group, a hydroxyl group, an amino group, an amide group, an epoxy group and the like, can be used. These functional group-containing monomers may be useful for introducing a crosslinking point into an acrylic polymer. The type of co-polymerizing monomer and the content ratio thereof (co-polymeric ratio) can be set suitably by taking into account the type of the crosslinking agent used and the amount thereof, the type of the crosslinking reaction, the desired extent of crosslinking (crosslinking density), and the like.

Among such functional group-containing monomers, one, two or more species selected from monomers having a carboxyl group or acid anhydrides thereof can be used preferably. As concrete examples of carboxyl group-containing monomers, ethylenic unsaturated monocarboxylic acids such as acrylic acid (AA), methacrylic acid (MAA) and crotonic acid, ethylenic unsaturated dicarboxylic acids such as maleic acid, itaconic acid and citraconic acid, anhydrides of ethylenic unsaturated dicarboxylic acids such as anhydrous maleic acid and anhydrous itaconic acid, and the like, may be cited. Essentially all functional group-containing monomer constituents may be carboxyl group-containing monomers. As preferred carboxyl group-containing monomers among them, AA and MAA can be indicated as examples. One of these may be used alone, or, AA and MAA may be combined in an arbitrary ratio and used.

According to one preferred mode of the art disclosed herein, AA and MAA arc co-polymerized in the acrylic polymer. According to a PSA composition containing an acrylic polymer having such a co-polymerization composition, a PSA sheet having even better repulsion resistance may be realized. The mass ratio between AA and MAA (AA:MAA) can be for instance in a range of approximately 1:10 to 10:1, and in general a range of approximately 1: 4 to 4:1 (for instance 1:2 to 2:1) is desirable. When co-polymerizing a carboxyl group-containing monomer, the co-polymerization amount thereof (if several species of carboxyl group-containing monomers are used, the total amount thereof) can be on the order of for instance 0.5% to 15% by mass of all monomer constituents, and in general on the order of 1% to 10% by mass (preferably 2% to 6% by mass, for instance 3% to 5% by mass) is adequate.

As other examples of functional group-containing monomers that may be preferably used, monomers having an alkoxy silyl group may be cited. As concrete examples of such alkoxy silyl group-containing monomers, 3-(meth) acryloxypropyl trimethoxy silane, 3-(meth)acryloxypropyl triethoxy silane, 3-(meth)acryloxypropyl methyl dimethoxy silane, 3-(meth)acryloxypropyl methyl diethoxy silane, and the like, may be cited. Co-polymerizing such alkoxy silyl group-containing monomers may become a technique that is advantageous in terms of realizing a PSA sheet that can provide both light pressure-bonding adhesiveness and cohesive strength at higher levels. When co-polymerizing an alkoxy silyl group-containing monomer, the co-polymerization amount thereof can be on the order of 0.005% by mass to 0.05% by mass (for instance 0.01% to 0.03% by mass) of all monomer constituents. According to one preferred mode of the art disclosed herein, at least an alkoxy silyl group-containing monomer, AA and MAA are co-polymerized as the functional group-containing monomers in the acrylic polymer. The acrylic polymer may substantially comprise alkyl (meth)acrylate, an alkoxy silyl group-containing monomer, AA and MAA only.

Generally, the functional group-containing monomer is preferably used in a range of 15% by mass or less (for instance 0.5% to 15% by mass, and preferably 1% to 10% by mass) among all monomer constituents. If the amount of functional group-containing monomer constituent used is excessive, the cohesive strength becomes excessively high and PSA properties (for instance adhesive strength) may tend to decrease.

As other examples of monomers that may be co-polymerized in the acrylic polymer (co-polymerizing monomer), vinyl esters such as vinyl acetate and vinyl propionate, aromatic vinyl compounds such as styrene and α-methyl styrene, nonaromatic ring-containing (meth)acrylates such as cyclohexyl (meth)acrylate and isobornyl (meth)acrylate, aromatic ring-containing (meth)acrylates such as phenyl (meth)acrylate and benzyl (meth)acrylate, alkoxy group-containing monomers such as methoxyethyl (meth)acrylate and ethoxyethyl (meth)acrylate, vinyl ethers such as methylvinyl ether, ethylvinyl ether, and the like, may be cited. As further other examples, multi-lunctional monomers having a plurality of polymerizing functional groups within a single molecule, for instance, ethyleneglycol di(meth)acrylate, pentacrythritol di (meth)acrylate, trimethylolpropane tri(meth)acrylate, pentaerythritol tri(meth)acrylate, dipentaerythritol hexa (meth)acrylate, and the like, may be cited. Alternatively, such multi-functional monomers may not have to be used substantially.

The monomer composition of the acrylic polymer is preferably determined in such a way that the glass transition temperature (Tg) thereof is in the range of -70°C to - 10°C (typically, -60°C to -20°C). If Tg is excessively high, the light pressure-bonding adhesiveness towards elastic foam is prone to being insufficient. On the other hand, if Tg is excessively low, repulsion resistance or cohesive strength tend to become readily insufficient. Here, the Tg of an acrylic polymer refers to the value determined by the formula of FOX based on the Tg the homopolymer of each monomer constituting the acrylic polymer and the mass fraction of the monomer (co-polymeric ratio). Values given in the well-known materials "Handbook of Pressure-Sensitive Adhesive Technology" from The Nikkan Kogyo Shimbun, Ltd. or "Polymer Handbook" from Wiley-Interscience are adopted as the Tg of a homopolymer. For instance, adopted are - 70°C for 2EHA, -54°C for BA, 8°C for methyl acrylate (MA), 105°C for methyl methacrylate, 66°C for cyclohexyl methacrylate, 32°C for vinyl acetate, 106°C for AA and 228°C for MAA.

As methods for obtaining water dispersion solution of acrylic polymers by polymerizing such monomers, polymerization methods that are well known or in common use can be adopted, and preferably emulsion polymerization can be used. As methods for supplying monomers when carrying out emulsion polymerization, batch feeding method whereby the entirety of the monomers is supplied in a single batch, continuous supply (instillation) method, fractional provision (instillation) method, and the like, can be adopted suitably. A portion or the entirety of the monomers (typically, the entirety) is mixed and emulsified beforehand with water (typically, a suitable amount of emulsifier is used along with water), and the emulsion thereof (monomer emulsion) may be supplied into the reaction vessel in a single batch, gradually or fractionally. The polymerization temperature can be selected suitably according to the species of the monomer, the species of the polymerization initiator, and the like, to be used, and can be, for instance, on the order of 20°C to 100°C (typically 40°C to 80°C).

As polymerization initiators used during polymerization, it can be selected suitably according to the type of polymerization method from among polymerization initiators that are well known or in common use. For instance, in emulsion polymerization methods, azo series polymerization initiators may be used preferably. Examples of azo initiators include 2,2'-azobisisobutylonitrile, 2,2'-azobis(2-methylpropionamidine) disulfate, 2,2'-azobis(2-amidino propane) dihydrochloride, 2,2'-azobis(2-(5-methyl-2-imidazoline-2-yl)propane] dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutylonitrile), 1,l'-azobis(cyclohexane-l-carbonitrile), 2,2'-azobis(2,4,4-trimethylpentane), dimethyl-2,2'-azobis(2-methylpropionate), and the like.

As other examples of polymerisation initiator, persulfates such as potassium persulfate and ammonium persulfate; peroxide initiators such as benzoyl peroxide, t-butyl hydroperoxide, di-t-butyl peroxide, t-butylperoxy benzoate, dicumyl peroxide, 1,1-bis(t-butylperoxy)-3,3,5-trimethyl cyclohexane, 1,1-bis(t-butylperoxy)cyclododecane and hydrogen peroxide; and the like, may be cited. As further other examples of polymerization initiators, redox initiators by combination of a peroxide and a reducing agent may be cited. Examples of such redox initiators include combination of a peroxide (such as hydrogen peroxide) and ascorbic acid (such as combination of hydrogen peroxide water and ascorbic acid), combination of a persulfate and sodium hydrogen sulfite, and the like.

Such polymerization initiators can be used alone or in a combination of two species or more. The amount of polymerization initiator used suffices to be an amount used conventionally, and can be selected from a range of, for instance, on the order of 0.005 to 1 parts in mass (typically 0.01 to 1 parts in mass) with respect to 100 parts in mass of all monomers combined.

Various conventionally well-known chain transfer agents (may be also understood as molecular weight adjuster or polymerization degree adjuster) can be used in the polymerization, as necessary. Such a chain transfer agent may be one, two or more species selected from mercaptans such as for instance, n-lauryl mercaptan, glycidyl mercaptan and 2-mercaptoethanol. Among them, the use of n-lauryl mercaptan is desirable. The amount of chain transfer agent used can be, for instance, on the order of approximately 0.001 to 0.5 parts by mass with respect to 100 parts by mass of monomer raw material. This usage amount may be on the order of approximately 0.02 to 0.05 parts by mass.

With emulsion polymerization thus carried out, a polymerization reaction mixture is obtained in the form of an emulsion in which an acrylic polymer is dispersed in water. As the water-dispersed acrylic polymer in the art disclosed herein, this polymerization reaction mixture or the reaction mixture after a suitable work-up can be used preferably. Alternatively, a polymerization method other than the emulsion polymerization method (for instance, solution polymerization, photopolymerization, bulk polymerization, and the like) may be used to synthesize the acrylic polymer, and use a water-dispersed acrylic polymer prepared by dispersing this polymer in water.

Regarding preparation of the water-dispersed acrylic polymer, an emulsifier can be used as necessary. As emulsifiers, any of anionic, non-ionic and cationic ones can be used. In general, the use of an anionic or non-ionic emulsifier is preferred. Such emulsifiers can be used preferably, for instance, when a monomer raw material is to be emulsion-polymerized, when an acrylic polymer obtained by another method is to be dispersed in water, and the like. As anionic emulsifiers, for example, sodium lauryl sulfate, ammonium lauryl sulfate, dodecylbenzene sulfonate, sodium polyoxyethylene alkyl ether sulfate, polyoxyethylene alkyl phenyl ether ammonium sulfate, sodium polyoxyethylene alkyl phenyl ether sulfate, and the like, may be given. As non-ionic emulsifiers, for example, polyoxyethylene alkyl ether, polyoxyethylene alkyl phenyl ether, and the like, may be given. In addition, radical polymerizing emulsifiers (reactive emulsifiers) having structures comprising a radical polymerizing group (a propenyl group or the like) introduced into these anionic or non-ionic emulsilfiers may be used. Alternatively, only emulsifiers containing no such radical polymerizing group may be used.

Such emulsifiers can be used as one species alone or by combining two or more species. It suffices that the amount of emulsifier used is a usage amount allowing an acrylic polymer to be prepared in the form of an emulsion, which is not limited in particular. In general, selection from a range of, for instance, on the order of 0.2 to 10 parts by mass (preferably 0.5 to 5 parts by mass) based on solid contents per 100 parts by mass of acrylic polymer is adequate.

In addition to the acrylic polymer, the PSA composition disclosed herein contains a tackifier (liquid tackifier) L assuming a liquid-form at 30°C. Here, assuming a liquid form at 30°C means that viscosity at 30°C is 2000 Pa·s or lower (typically, 10 Pa·s to 2000 Pa·s). From the point of view of case of the PSA composition preparation (for instance, ease of mixing into the water-dispersed acrylic polymer), it is more desirable that the viscosity at 30°C is 1700 Pa·s or lower (for instance, 500 Pa·s or lower, and may be 200 Pa·s or lower).

It is possible to adopt as values for this viscosity the values measured for a tackifier L substantially comprising only non-volatile components (that is to say, not dissolved with an organic solvent in order to decrease the viscosity nor prepared in the form of a water dispersion solution; typically, the amount of non-volatile components being 95% to 100% by mass), using a commercial F3-type viscometer with the conditions: rotor No. 7, rotation speed of 2 rpm, liquid temperature of 30°C and measurement time of 1 minute.

Inclusion of such a tackifier L allows the rough-surfaced adhesion property of the PSA sheet formed from the PSA composition to be improved. A PSA sheet may be realized, which, or instance, when the PSA sheet is adhered to an adherend with a poor adhesive property such as elastic foams, demonstrates satisfactory adhesive property to the adherend even by pressure-bonding lightly (in other words, without strongly pressing and crushing the elastic foam) to the adherend (adhesion reliability). Thus, bonding workability with respect to adherends (for instance elastic foams) may be improved remarkably.

Here, the adhesive property of a PSA sheet when lightly pressure-bonded to an elastic foam may be evaluated by, for instance, pressure-bonding the PSA sheet to a flexible urethane foam that has a thickness of 10 mm free state (a state in which no external force is applied) under conditions where the urethane foam is compressed to a thickness of 5 mm (in other words, a condition where the urethane foam is compressed to a thickness of 50%), and measuring the 180° peel adhesive strength (hereinafter also referred to as "light pressure-bonding adhesive strengths") 30 minutes after the pressure-bonding. For instance, ECS (gray), a product from Inoac Corporation (herein after may be referred simply to as "ECS foam"), can be used as the flexible urethane foam. This ECS foam is a polyether urethane foam with a density of $22 \pm 2$ kg-m$^3$ and a hardness (by the D method defined in JIS K6400-2 (2004)) of $107.9 \pm 22.6$ N. The light pressure-bonding adhesive strength can be measured more concretely according to the light pressure-bonding adhesive strength measurement method described among the examples described later.

In one preferred aspect of the art described herein, a tackifier L with a hydroxyl group value of 50 mg KOH/g or greater is used. A tackifier L that meets such a hydroxyl group value may realize a PSA sheet having more excellent light pressure-bonding adhesive strength.

Values measured by the potentiometric titration method as defined in JIS-K0070 (1992) can be adopted as the values for the hydroxyl group value. The concrete measurement method is as indicated below:

[Hydroxyl group value measurement method]

1. Reagents

1) Approximately 12.5 g (approximately 11.8 ml) of anhydrous acetic acid is weighed, pyridine is added thereto so as to reach 50 ml in total volume, which is stirred thoroughly and used as acetylation reagent. Alternatively, approximately 25 g (approximately 23.5 ml) of anhydrous acetic acid is weighed, pyridine is added thereto so as to reach 100 mL in total volume, which is stirred thoroughly and used.

2) A solution of 0.5 mol/l potassium hydroxide in ethanol is used as the measurement reagent.

3) In addition, toluene, pyridine, ethanol and distilled water are prepared.

2. Operation

1) A flat-bottomed flask is used to collect approximately 2 g of sample by weighing precisely, added with 5 ml of acetylation reagent and 10 ml of pyridine, and fitted with an air cooling tube.

2) The flask is heated in a bath at 100°C for 70 minutes and then cooled in air; from the upper portion of the cooling tube, 35 ml of toluene is added as solvent and stirred, then, 1 ml of distilled water is added and stirred to decompose the anhydrous acetic acid. To complete decomposition, heating in the bath for 10 minutes and then cooling in air were performed again.

3) The cooling tube is washed with 5 ml of ethanol and taken out. Next, 50 ml of pyridine is added as solvent and stirred.

4) A transfer pipette is used to add 25 mL of a solution of 0.5 mol/l potassium hydroxide in ethanol.

5) Potentiometric titration is carried out with the solution of 0.5 mol/l potassium hydroxide in ethanol. The inflection point of the obtained titration curve serves as the end point.

6) For the blank test, 1) to 5) above are carried out without introducing a sample.

3. Calculation

The hydroxyl group value is calculated according to the following formula:

$$\text{Hydroxyl group value (mg KOH/g)} = [(\text{B-C}) \times f \times 28.05]/\text{S} + \text{D}$$

where:

B: volume (ml) of solution of 0.5 mol/l potassium hydroxide in ethanol used for blank test,
C: volume (ml) of solution of 0.5 mol/l potassium hydroxide in ethanol used in the sample,
f: a factor of the solution of 0.5 mol/l potassium hydroxide in ethanol,
S: sample mass (g),
D: acid number, and

28.05: 1/2 of the molecular weight of potassium hydroxide 56.11.

Values measured by the potentiometric titration method as defined in JIS-K0070 (1992) are adopted as values for the acid number. The concrete measurement method is as indicated below:

[Acid number measurement method]

1. Reagents

1) Diethyl ether and ethanol are mixed and stirred at a volume ratio of 4:1, which is used as solvent.
2) A solution of 0.1 mol/l potassium hydroxide in ethanol is used as measurement reagent.
3) A phenolphthalein solution is used as an indicator.

2. Operation

1) A few drops of phenolphthalein solution are added to the solvent, which is neutralized with a solution of 0.1 mol/l potassium hydroxide in ethanol.
2) Approximately 5 g of sample is collected in a beaker by weighing precisely, 50 ml of solvent neutralized in 1) is added, and dissolved completely by stirring above a panel heater (80°C).
3) Potentiometric titration is carried out with the solution of 0.1 mol/l potassium hydroxide in ethanol. The inflection point of the obtained titration curve serves as the end point.

3. Calculation

The acid number is calculated according to the following formula.

$$\text{Acid number (mg KOH/g)} = (B \times f \times 5.611)/S$$

where:

B: volume (ml) of solution of 0.1 mol/l potassium hydroxide in ethanol used in the sample,
f: a factor for the solution of 0. mol/l potassium hydroxide in ethanol,
S: sample mass (g), and
5.611: 1/10 of the molecular weight of potassium hydroxide 56.11.

Mixing a tackifier L that satisfies a viscosity and a hydroxyl group value allows the light pressure-bonding adhesiveness towards elastic foams (for instance flexible urethane foam) to be improved remarkably. In order to realize a higher light pressure-bonding adhesiveness, a tackifier L with a hydroxyl group value of 65 mg KOH/g or greater is preferably used. A tackifier L with a hydroxyl group value of 100 mg KOH/g or greater (furthermore, 150 mg KOH/g or greater; for instance 200 mg KOH/g or greater) may also be used. Generally, if the hydroxyl group value of a tackifier becomes higher, the viscosity at 30°C of the tackifier tends to increase. In the art disclosed herein, using a tackifier L with an as high as possible hydroxyl group value in a range where the viscosity at 30°C becomes 2000 Pa·s or lower (more preferably 1700 Pa·s or lower) the effect of improving light pressure-bonding adhesiveness may be exerted better. Although the upper limit of the hydroxyl group value is not limited in particular, considering the viscosity described above, in general, those with a hydroxyl group value of 500 mg KOH/g or lower (for instance 300 mg KOH/g or lower) may be used preferably.

As the tackifier L, a variety of materials having such a viscosity (more preferably a hydroxyl group value) are used alone or in combination of two or more materials. For instance, such materials as from the rosin series, the terpene series, the hydrocarbon series and the elastomer series may be used as the tackifier L. As tackifiers from the rosin series, rosin esters (for instance, esterification products of non-modified rosin; esterification products of modified rosin such as hydrogenated rosin and disproportionated rosin) or the like can be given as examples. As tackifiers from the terpene series, terpene resin, terpene phenol resin comprising the terpene resin modified with phenol, and the like, may be given as examples. As tackifiers from the hydrocarbon series, aliphatic hydrocarbon resin, aromatic hydrocarbon resin (xylene resin or the like), hydrogenated hydrocarbon resin, coumarone resin, coumarone indene resin, and the like, can be given as examples. As tackifiers from the elastomer series, acrylic oligomer, urethane oligomer, and the like, can be given as examples. While not to be limited in particular, the molecular weight of the tackifier L is preferably 10,000 or lower, in general 5,000 or lower (for instance 3,000 or lower, and furthermore 500 or lower) being desirable.

As examples of tackifier L that are desirable to the art disclosed herein, rosin esters, terpene phenol resins and acrylic oligomers may be cited. Among them, rosin esters and terpene phenol resins are desirable. As an example of particularly desirable tackifiers L, terpene phenol resins with hydroxyl group values of 150 mg KOH/g or greater (typically, 150 to 300 mg KOH/g) may be cited. As other preferred examples, rosin ester with a hydroxyl group value of 100 mg KOH/g or greater (typically, 100 to 300 mg KOH/g) may be given.

The amount of tackifier L used can be for instance 5 parts by mass or more with respect to 100 parts by mass of acrylic polymer, and in general, satisfactory effects are obtained with 10 parts by mass or more (for instance 15 parts by mass or more). From the point of view of, for example, balance with other PSA properties and machinery safety of a pressure-sensitive adhesive constituent, an amount of tackifier L used of 70 parts by mass or less is suitable, and in general, 60 parts by mass or less (for instance 50 parts by mass or less) is desirable.

As method for preparing a PSA composition (dispersion solution) containing an aqueous solvent, an acrylic polymer and a tackifier L, the method of adding the tackifier L to a water-dispersed acrylic polymer and mixing can be preferably adopted. In one preferred mode of the art disclosed herein, the tackifier L can be added in a morphology that substantially comprises only non-volatile components, without being intentionally diluted with an organic solvent or turned into a water dispersion solution (emulsion) beforehand. In this way, at least one effect may be realized among improvement of productivity of the PSA composition (and by extension the PSA sheet), alleviation of environmental load and forming of PSA sheets having better adhesive performance. When adding the tackifier L to the water-dispersed acrylic polymer, the tackifier L is preferably warmed and then added. In general, the extent of this heating is preferably 30°C or higher and more preferably 35°C or higher. This allows the water-dispersed acrylic polymer and the tackifier L to be mixed more readily and suitably. From such point of view as case of manufacturing operation (for instance handleability), in general, a tackifier L temperature of 60°C or lower is suitable and 50°C or lower is desirable.

In another preferred aspect of the art disclosed herein, the tackifier L can be added to the water-dispersed acrylic polymer in the form of a dispersion solution (emulsion) comprising the tackifier L pre-dispersed in the aqueous solvent. Regarding the preparation of an emulsion of tackifier L, an adequate surfactant (emulsifier) can be used. For instance, a surfactant S having a phenyloxy group having in the molecular structure at least one substituent having an aromatic ring (hydrophobic group) and an anionic or non-ionic hydrophilic group can be adopted preferably.

According to one preferred mode of the art disclosed herein, in addition to the tackifier L, the PSA composition further contains tackifier resin H having a softening point of 60°C or higher (and thus being in a solid state at 30°C). As such tackifier resins H, various tackifier resins that are general in the field of acrylic PSAs can be used, such as from the rosin series, terpene series, hydrocarbon series, epoxy series, polyamide series, phenol series and ketone series. As tackifier resins from the rosin series, non-modified rosins, modified rosins (hydrogenated rosins, disproportionated rosins, polymerized rosin and the like), esterification products thereof (rosin esters), unsaturated fatty acid-modified compounds, and the like, may be cited. Among these, those having a softening point of 80°C or higher (more preferably 100°C or higher, even more preferably 120°C or higher and particularly preferably 135°C or higher) may be adopted preferably as the tackifier resin H. According to such a tackifier resin H, a PSA sheet with a higher performance may be realized (at least one of repulsion resistance and cohesive strength is improved). The upper limit of the softening point of the tackifier resin H is not limited in particular, and for instance can be approximately 170°C or lower. Such a tackifier resin H can be used alone or by combining two or more species. According to one preferred mode, a tackifier resin of the rosin series is used as the tackifier resin H. A particularly satisfactory result may be realized by combining a rosin ester, a terpene phenol resin or an acrylic oligomer serving as the tackifier L, with a tackifier resin of the rosin series (for instance, polymerized rosin ester) H having a softening point of 135°C or higher.

Note that the softening point of the tackifier resin H referred to herein is defined as the value measured based on the softening point test method (ring-and-ball method) as established in JIS K 5902 and JIS K 2207. Concretely, a sample is melted promptly at an as-low-as-possible temperature and this is filled carefully into a ring placed on a flat metal plate so as not to form bubbles. After cooling, the bulging portion above the plane containing the top edge of the ring is cut away with a slightly heated small knife. Next, into a glass container (heating bath) of 85 mm or greater in diameter and 127 mm or greater in height, a support (ring stand) is introduced and glycerin is poured until the depth is 90 mm or greater. Next, a steel ball (9.5 mm in diameter and weighing 3.5 g) and the sample-filled ring are immersed into the glycerin so as not to come in contact with one another, and the temperature of glycerin is kept at 20°C plus/minus 5°C for 15 minutes. Next, a steel ball is placed on the surface of the sample in the ring at the center thereof, and this is placed at a given position on the support. Next, keeping the distance from the top edge of the ring to the glycerin surface at 50 mm, a thermometer is placed, the position of the center of the mercury ball of the thermometer is brought to the same height as the center of the ring, and the container is heated. The flame of the Bunsen burner used for heating is caused contact the bottom of the container in between the center and the border so that the heating is uniform. Note that, after 40°C has been reached from the beginning of the heating, the rate by which the bath temperature rises must be 5.0°C plus/minus 0.5°C per minute. When the sample gradually softens, flows down from the ring and finally comes into contact with the bottom plate, the temperature is read, which serves as the softening point. Two or more measurements of softening point are carried out simultaneously and the mean value thereof is adopted.

The amount of tackifier resin H used can be for instance 5 parts by mass or more with respect to 100 parts by mass of acrylic polymer, and in general, satisfactory effects are obtained with 10 parts by mass or more (for instance 15 parts by mass or more). From the point of view of balance with other PSA properties (for instance light pressure-bonding adhesiveness), an amount of tackifier resin used of 50 parts by mass or less is suitable, and in general, 40 parts by mass or less (for instance 30 parts by mass or less) is desirable. The tackifier resin H may be used preferably in the form of an aqueous emulsion comprising the resin dispersed in water. For instance, mixing a water dispersion solution of an acrylic polymer and an aqueous emulsion of tackifier resin H allows a PSA composition to be prepared readily, containing these with the desired proportions.

In the art disclosed herein, when using tackifier L and tackifier resin H in combination, the total amount thereof used can be for instance 10 to 100 parts by mass with respect to 100 parts by mass of acrylic polymer, and in general 20 to 75 parts by mass (for instance 30 to 70 parts by mass) is suitable. The ratio of the amounts of tackifer L and tackifier resin H used (L:H) can be for instance 10:1 1 to 1:3 based on mass, and in general 5:1 to 1:2 (for instance 3:1 to 1: 1) is desirable.

In addition to the acrylic polymer and the tackifier L, the PSA composition disclosed herein further contains a surfactant S. In the molecular structure, this surfactant S is provided with a phenyloxy group having at least one substituent having an aromatic ring serving as a hydrophobic group, and is provided with an anionic or non-ionic hydrophilic group. According to a surfactant S having such a molecular structure, by containing the tackifier L in addition to the acrylic polymer, a PSA constituent with an improved rough-surfaced adhesion property (in particular, light pressure-bonding adhesiveness with respect to elastic foams) can be dispersed in an aqueous solvent more stably, without significantly loosing water-resistance of the PSA sheet. In particular, the mechanical stability of a PSA composition comprising a PSA constituent dispersed in an aqueous solvent (typically, an emulsion) can be improved.

The mechanical stability of the PSA composition referred to here can be gauged, for instance, by using a Maron tester manufactured by Tester Sangyo Co., Ltd (Product name "AB-802 Maron Type Mechanical Stability Tester") to apply shear under the conditions of 50 g sample amount, 10 kg load, 500 rpm rotation speed and 5 minutes test time, drying the agglomerate generated thereby and determining the mass thereof to calculate the proportion of the dry mass of the agglomerate with respect to the mass of the solid content contained in the sample (aggregate generation amount (% by mass)). More concretely, it can be gauged according to the mechanical stability evaluation method described in the examples below.

In addition, water-resistance of a PSA sheet indicates the property that the decrease in adhesive strength is small even if the PSA sheet is stored under a high humidity environment in an adhered state to an adherend. It can be evaluated, for instance, by adhering a PSA sheet to an adherend (for instance, a polypropylene plate), storing it under a hot and humid environment of 40°C and 92% RH for 14 days, removing it from this hot and humid environment, and, after a prescribed period of time, measuring the 180° peel adhesive strength (post-water resistance adhesive strength). More concretely, it can be measured according to the water-resistance evaluation method described in the examples below.

The aryloxy group of the surfactant S may be a phenyloxy group having one to five (typically one to three) substituents having an aromatic ring. As concrete examples of phenyloxy group having such substituents, a phenyloxy group having at least one $C_6H_5$-CH ($CH_3$)- group as the substituent (styrenated phenyloxy group) and a phenyloxy group having at least one $C_6H_5$-$CH_2$- group as the substituent (benzylated phenyloxy group) may be cited. For instance, surfactant S provided with a phenyloxy group having one (monostyrenated), two (distyrenated) or three (tristyrenated) $C_6H_5$-CH ($CH_3$)-groups serving as a hydrophobic group is desirable. As a particularly preferred hydrophobic group, distyrenated phenyloxy group can be given as example. The structure of the surfactant contained in the PSA composition, the PSA sheet or the PSA, may be gauged, for instance, by extracting the sample with an appropriate solvent (in the case of a PSA composition, it is adequate to extract with a solvent the PSA obtained by drying the composition) and performing on the solid obtained by drying this extract, one, two or more among NMR (nuclear magnetic resonance) measurements, IR (infrared spectroscopy spectra) measurements, MALDI-TOF-MS (matrix-assisted laser desorption ionization mass spectrometry), and the like.

The hydrophilic group contained in the surfactant S has may be a group, which extremity is typically bonded to the above-mentioned hydrophobic group, having an anionic functional group such as, for instance, sulfuric acid ester ($-O-SO_3^-$), sulfonate ($-SO_3^-$), carboxylate ($-CO_2^-$) or phosphoric acid ester salt ($-O-PO(OH)O^-$). A surfactant S that is a salt between such an anionic functional group and a monovalent cation may be preferably adopted. As examples of the monovalent cation, ammonium ($NH_4^+$) and cations of alkaline metals such as sodium and potassium may be cited. The hydrophilic group may be a group having a structure in which the anionic functional group is bonded to a polyoxyalkylene chain (preferably, with a number of carbons of 2 or 3 for the alkylene group). For the polyoxyalkylene chain, the repeating unit thereof may be the oxyethylene ($-CH_2CH_2O-$) structure, the oxypropylene ($-CH_2CH(CH_3)O-$) structure, a structure in which an oxyethylene unit and an oxypropylene unit are linked at random, a structure in which a repeating portion of oxyethylene units and a repeating portion of oxypropylene units are linked, or the like. The number of oxyalkylene units contained in the polyoxyalkylene chain may be, for instance, 1 to 1000 (preferably 10 to 300). For instance, a compound (typically, a polyoxyethylene ammonium sulfate salt having a structure in which the hydrophobic group and the hydrophilic group are directly bonded) having any hydrophobic group described above and the hydrophilic group represented by $-(CH_2CH_2O)_n-SO_3NH_4$ (n = 1 to 1000, preferably 10 to 300) can be preferably adopted as the surfactant S.

The surfactant S may in addition have a non-ionic hydrophilic group. As suitable examples of non-ionic hydrophilic group, a polyoxyalkylene chain (preferably, with a number of carbons of 2 or 3 for the alkylene group) with a hydroxyl group extremity, an etherified (for instance methoxylated) extremity, and the like, may be cited. For the polyoxyalkylene chain, the repeating unit thereof may be the oxyethylene structure, the oxypropylene structure, a structure in which an oxyethylene unit and an oxypropylene unit are linked at random, a structure in which a repeating portion of oxyethylene units and a repeating portion of oxypropylene units are linked, or the like. The number of oxyalkylene units contained in the polyoxyalkylene chain may be, for instance, 1 to 1000 (preferably 10 to 300). For instance, a compound (typically, a compound having a structure in which the hydrophobic group and the hydrophilic group are directly bonded) having any hydrophobic group described above and the hydrophilic group represented by $-(CH_2CH_2O)_n-H$ (n = 1 to 1000, preferably 10 to 300) can be preferably adopted as the surfactant S.

The surfactant S contained in the PSA composition disclosed herein may have been used as an emulsifier when preparing a water-dispersed acrylic polymer (for instance when a monomer source is emulsion-polymerized, that is to say, when the acrylic polymer is synthesized), or may have been used when mixing a tackifier L into the water-dispersed acrylic polymer (typically, already contains the emulsifier used for the preparation of the water-dispersed acrylic polymer) to prepare a PSA composition (that is to say, after the acrylic polymer has been synthesized) by being added (subsequent addition). In addition, of the surfactant S used, a partial amount may be used as an emulsifier for emulsion polymerization and the remaining amount subsequently added. In a preferred aspect, a water-dispersed acrylic polymer is prepared through emulsion polymerization using an emulsifier that docs not correspond to the surfactant S and then the surfactant S is subsequently added to obtain a PSA composition. According to this aspect, both the polymerization stability during emulsion polymerization and the mechanical stability of the PSA composition may be provided at higher levels.

When a portion or the entirety of surfactant S is subsequently added, the surfactant S may be added separately from the tackifier L (alone), or an aqueous emulsion of tackifier L may be prepared using the surfactant S and this emulsion added to the water-dispersed acrylic polymer. In addition, of the subsequently added surfactant S, a partial amount may be used for preparing an emulsion of tackifier L and the remaining amount added alone to the water-dispersed acrylic polymer. When a portion or the entirety of surfactant S is added separately from the tackifier L, the tackifier L and the surfactant S may be added simultaneously (in parallel), the surfactant S may be added first or the tackifier L may be added first.

The amount of surfactant S contained in the PSA composition disclosed herein can be, for instance, 0.5 parts by mass to 20 parts by mass with respect to 100 parts by mass of tackifier L, and, in general, 1 part by mass to 15 parts by mass (for instance, 2 parts by mass to 10 parts by mass) is desirable. If the surfactant S content is excessively low with respect to the tackifier L content, the effect of preventing a decrease in dispersion stability (mechanical stability) which accompanies the addition of tackifier L may sometimes tend to be insufficient. If the surfactant S content is excessively high, water-resistance of the PSA sheet may tend to decrease.

The amount of surfactant S contained in the PSA composition disclosed herein can be, for instance, 0.3 to 10 parts by mass with respect to 100 parts by mass of non-volatile component (PSA constituent) in the composition, and, in general, 0.5 to 5 parts by mass is desirable. If the surfactant S content is excessively low with respect to the PSA constituent content, the dispersion stability (mechanical stability) of the PSA composition may sometimes tend to be insufficient. If the surfactant S content is excessively high, water-resistance of the PSA sheet may tend to decrease.

In one preferred aspect, among the total amount of surfactants contained in the PSA composition disclosed herein, the amount of surfactant S is 20% by mass or greater (more preferably 30% by mass or greater). For instance, among the entire amount of surfactant, 50% by mass or greater may be surfactant S, and essentially all may be surfactant S. If the amount of surfactant S among the total amount of surfactants is excessively low, the dispersion stability (mechanical stability) of the PSA composition may sometimes tend to be insufficient. In the aspect where a surfactant for emulsion polymerization that does not correspond to the surfactant S is used, the amount of surfactant S among the total amount of surfactants is preferably 75% by mass or less (for instance 60% by mass or less). In this aspect, if the amount of surfactant S among the total amount of surfactants is excessively high, polymerization stability tends to be insufficient due to the amount of surfactant for emulsion polymerization being relatively low, and water-resistance may tend to decrease due to the total amount of surfactants being excessively high.

The PSA composition may comprise, added as necessary (subsequently added, that is to say, the crosslinking agent is added subsequently to the synthesis of the acrylic polymer), a general crosslinking agent, for instance, a crosslinking agent selected from a carbodiimide crosslinking agent, a hydrazine crosslinking agent, an epoxy crosslinking agent, an isocyanate crosslinking agent, an oxazoline crosslinking agent, an aziridine crosslinking agent, a metal chelate crosslinking agent, a silane coupling agent, and the like. Such crosslinking agents may be used alone or by combining two or more species. Alternatively, the PSA composition may be one for which a subsequent addition of such a crosslinking agent has not been carried out substantially. For instance, when an alkoxy silyl group-containing monomer has been co-polymerized in an acrylic polymer, a constitution may be adopted preferably, which does not use substantially a subsequently added crosslinking agent.

The PSA composition described above may contain, as necessary, an acid or a base (aqueous ammonia or the like) used for the purpose of pH adjustment or the like. As other optional constituents that may be included in the composition, various additives that are general in the field of aqueous PSA composition can be given as examples, such as viscosity adjuster, leveling agent, plasticizer, filler, colorant such as pigment and dye, stabilizer, antiseptic agent and anti-aging agent. Regarding such various additives, since conventionally well-known ones can be used via conventional methods and do not characterize in particular the present invention, detailed descriptions thereof will be omitted.

The PSA sheet provided by the present invention comprises a PSA layer formed from a PSA composition disclosed herein. A substrated PSA sheet of a morphology having such a PSA layer on one side or on each side of the substrate (support) is adequate, as is a substrate-less PSA sheet of a morphology in which the PSA layer described above is retained by a release liner (may be understood as being a substrate having a release side), or the like. The concept of PSA sheet herein includes those referred to as adhesive tape, adhesive label, adhesive film and the like. Note that, although the PSA layer described above is typically formed continuously, it is not limited to such a morphology, and the PSA layer may be formed in a regular or random pattern of, for instance, dots, stripes or the like. In addition, the PSA sheet provided by the present invention may be in roll form or in sheet form. Alternatively, the PSA sheet may be of morphologies that have been further processed into a variety of shapes.

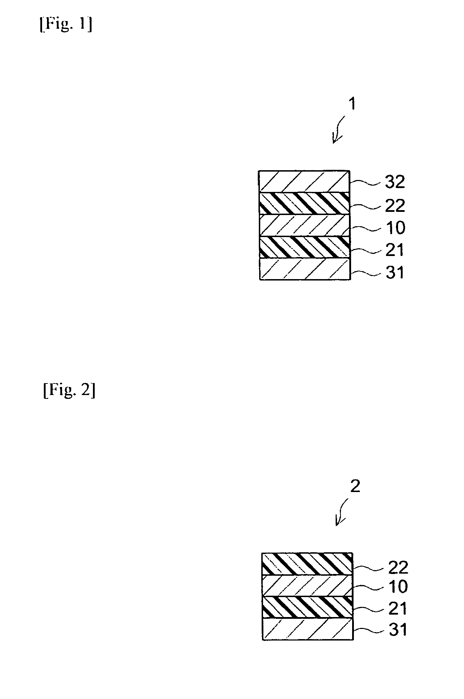

The PSA sheet disclosed herein may have cross-sectional structures, for instance, shown schematically in Fig. 1 to Fig. 6. Among these, Fig. 1 and Fig. 2 are constitution examples of substrated PSA sheets of the double-sided adhesive type. The PSA sheet 1 shown in Fig. 1 has a constitution in which PSA layers 21 and 22 are provided on each side of a substrate 10 (both non-releasing) and these PSA layers are respectively protected by release liners 31 and 32, of which at least the PSA layer side is a release side. The PSA sheet 2 shown in Fig. 2 has a constitution in which PSA layers 21 and 22 arc provided on each side of a substrate 10 (both non-releasing), the PSA layer 21, which is the first among these, is protected by a release liner 31, of which each side is a release side. This type of PSA sheet 2 can have a constitution in which the PSA layer 22 is also protected by the release liner 31, by rolling the PSA sheet and bringing the second PSA layer 22 in contact with the back side of the release liner 31.

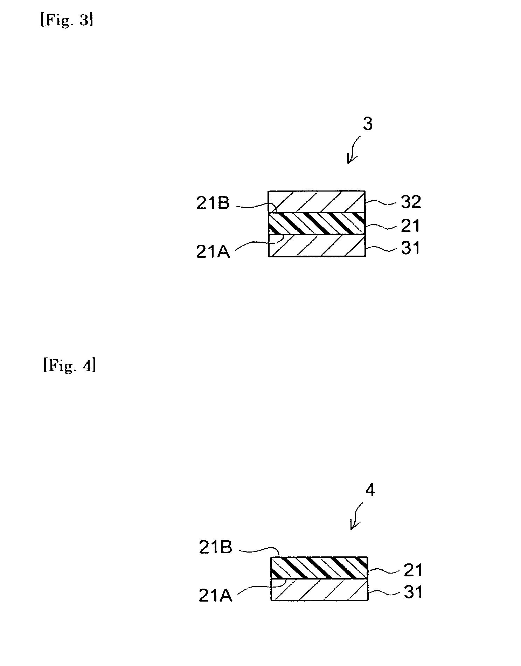

Fig. 3 and Fig. 4 are constitution examples of a substrate-less two-sided PSA sheet. The PSA sheet 3 shown in Fig. 3 has a constitution in which both sides 21A and 21 B of a substrate-less PSA layer 21 are protected respectively by release liners 31 and 32, of which at least the PSA layer side is a release side. The PSA sheet 4 shown in Fig. 4 has a constitution in which a first surface (adhesive surface) 21 A of the substrate-less PSA layer 21 is protected by a release liner 31, of which each side is a release side, and when this is rolled, a second surface (adhesive surface) 21 B of the PSA layer 21 comes in contact with the back side of the release liner 31, allowing for a constitution in which the second side 21 B is also protected with the release liner 31.

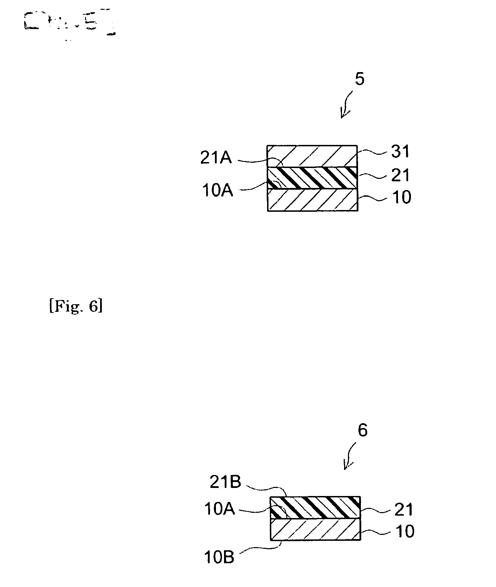

Fig. 5 and Fig. 6 are constitution examples of a substrated PSA sheet of the single-sided PSA type. The PSA sheet 5 shown in Fig. 5 has a constitution in which a PSA layer 21 is provided on a first side 10A (non-releasing) of a substrate 10, a surface (adhesive surface) 21 A of this PSA layer 21 is protected with a release liner 31 of which at least the PSA layer side is a release side. The PSA sheet 6 shown in Fig. 6 has a constitution in which a PSA layer 21 is provided on a first side 10A (non-releasing) of a substrate 10. The second side 10B of the substrate 10 is a release side, and when the PSA sheet 6 is rolled, the PSA layer 21 comes into contact with the second side 10B, protecting the surface (adhesive surface) 21B of the PSA layer with the second side 10B.

As substrate for supporting (backing) the PSA layer in a substrated PSA sheet of the single-sided PSA type or of the two-sided PSA type, various resin films (polyolefin film, polyester film and the like), papers (Japanese paper, premium paper and the like), fabrics such as woven fabric and non-woven fabric from a single or blend or the like of various fibrous substances, rubber sheets (natural rubber sheet and the like), foam sheets comprising foams such as foam polychloroprene rubber (foam polyurethane sheet and the like), metal foils (aluminum foil and the like), composites thereof, and the like, can be used. The substrate may have a monolayer morphology, or may have a layered morphology. While the thickness of the substrate can be selected suitably according to the purpose, it is generally 10 μm to 500 μm (preferably 10 μm to 200 μm). From the point of view of repulsion resistance, the use of a substrate with a thickness of 10 μm to 50 μm is advantageous.

The art disclosed herein may be applied particularly preferably to substrate-less or substrated PSA sheet of the two-sided PSA type (for instance, a two-sided PSA sheet that may be used in an application for bonding an elastic foam such as soft polyurethane and an adherend). As preferred substrates in substrated two-sided PSA sheets, non-woven fabrics well known or commonly used in the field of PSA sheets of such morphology can be used preferably. For instance, non-woven fabrics constituted from natural fibers such as wood pulp, cotton and fiber (for instance, Manila fiber); non-woven fabrics constituted from chemical fibers (synthetic fibers) such as polyester fiber, rayon, vinylon, acetate fiber, polyvinyl alcohol (PSA) fiber, polyamide fiber, polyolefin fiber and polyurethane fiber; non-woven fabrics constituted by using two or more species of fibers of different materials in combination; and the like, can be used. Note that "non-woven fabric" referred to herein is a concept indicating non-woven fabrics for PSA sheet used in the field of PSA tapes and other PSA sheets mainly and refers to non-woven fabrics such as those prepared using a generic paper machine (may also be referred to as so-called "papers").

The thickness of the PSA layer may be for instance on the order of 5 μm to 200 μm (preferably 10 μm to 100 μm). In the case of a two-sided PSA sheet in which a PSA layer is provided on both sides of a substrate, the thickness of the PSA layer as referred to herein refers to the thickness of the PSA layer per one side thereof. With a PSA sheet that may be bonded to an elastic foam such as soft polyurethane to be used, it is advantageous that the thickness of the PSA layer to be bonded to the foam is 30 μm or greater (preferably 40 μm or greater) in order to obtain a satisfactory light pressure-bonding adhesive strength against the foam. On the other hand, from the point of view of the balance with other PSA physical properties, PSA sheet productivity, and the like, the thickness of the PSA layer is preferably 100 μm or less. One preferred mode of the PSA sheet disclosed herein is a PSA sheet in which the thickness of the PSA layer is 40 μm to 80 μm (typically 50 μm to 70 μm; for instance, around 60 μm), and which satisfies the above property (A) (and furthermore, one or both of the properties (B) and (C) preferably). For instance, it may be a two-sided PSA sheet comprising a PSA layer with the above thickness on both sides of a non-woven fabric, a substrate-less two-sided PSA sheet comprising a PSA layer with the above thickness, a single-sided PSA sheet having a PSA layer with the above thickness on one side of a substrate, or the like.

The PSA layer may be formed, for instance, by conferring (typically by coating) any PSA composition disclosed herein onto a substrate or a release liner, and drying the composition. The PSA sheet provided with such a PSA layer may be produced by a variety of methods. For instance, in the case of a substrated PSA sheet, a method whereby a PSA composition is directly conferred to a substrate, dried to form a PSA layer on the substrate, and a release liner is layered on this PSA layer; a method whereby a PSA layer formed on a release liner is placed on a substrate, and while the PSA layer is transferred onto the substrate, the release liner is used as-is for protecting the PSA layer; and the like, can be adopted.

Release liners that are well known or commonly used in the field of PSA sheet can be suitably selected and used. For instance, release liners can be used suitably, having a constitution in which a release treatment has been performed as necessary on the surface of substrates comprising various resin films, papers, fabrics, rubber sheets, foam sheets, metal foils, composites thereof (for instance, layered structure sheet comprising an olefin resin laminated on both sides of a paper), and the like.

Coating of PSA composition can be carried out using coaters that are in common use, such as, for instance, gravure roll coater, reverse roll coater, kiss roll coater, dip roll coater, bar coater, knife coater and spray coater. Alternatively, a doctor blade may be used for coating. Since the PSA composition disclosed herein has excellent mechanical stability, for instance, coating is possible with coaters that may apply a strong shear on the composition as is the case with various roll coaters (such as reverse roll coater).

In a preferred aspect of the PSA composition disclosed herein, the amount of aggregates of the composition generated is less than 1.0% by mass as measured by the method described in the examples below. A PSA composition in which this amount of aggregate generation is 0.5% by mass or less (typically less than 0.5% by mass) is more desirable.

In another preferred aspect of the PSA composition disclosed herein, the light pressure-bonding adhesive strength of the PSA sheet is 1.5 N/20 mm or greater (and more preferably 2.0 N/20 mm or greater, for instance, 2.5 N/20 mm or greater) as measured by the method described in the examples below. While not limited in particular, the upper limit of the light pressure-bonding adhesive strength is in general 10 N/20 mm or less when the strength of the ECS foam *per se* is take into account. When the peeling mode is one in which the PSA sheet does not separate at the boundary surface with the adherend immediately after the beginning of peeling or during peeling, but a portion of the adherend peels-off from the remainder along with the PSA sheet, the light pressure-bonding adhesive strength can be inferred to be at least 1.5 N/20 mm or greater.

In another preferred aspect of the PSA composition disclosed herein, the PP adhesive strength 2 hours after removal is 2.0 N/20 mm or greater (and more preferably 5.0 N/20 mm or greater) as measured by the method described in the examples below. In a further other preferred aspect, the PP adhesive strength 2 hours after removal is 30% or greater (and more preferably 50% or greater) of the PP adhesive strength 30 minutes after pressure-bonding, as measured by the method described in the examples below.

EXAMPLES

Hereafter, a number of examples according to the present invention will be described; however, the present invention is not intended to be limited to those indicated in examples. Note that in the following description, mass is the criteria for "part" and "%" unless expressly indicated otherwise. In addition, the amount of each material used is in non-volatile component (NV) basis, unless explicitly stated otherwise.

<Examples 1>

Into a reaction vessel equipped with a condenser, a nitrogen inlet tube, a thermometer and a stirrer, 40 parts of ion-exchanged water was introduced and stirred at 60°C for one hour or longer under nitrogen flow. Next, 0.1 parts of 2,2'-azobis[2-(5-methyl-2-imidazoline-2-yl)propane]dihydrochloride (polymerization initiator) was introduced into this reaction vessel and, while maintaining the system at 60°C, a monomer emulsion was added therein dropwise gradually over three hours to proceed with the emulsion polymerization reaction. As for the monomer emulsion, 70 parts of 2EHA, 30 parts of methyl acrylate, 1.5 parts of AA, 2.5 parts of MAA, 0.033 parts of n-lauryl mercaptan (chain transfer agent), 0.02 parts of 3-methacryloxypropyltrimethoxy silane (KBM-503, a product from Shin-Etsu Chemical Co., Ltd.) and 2 parts of sodium polyoxyethylene lauryl sulfate (emulsifier), added to 30 parts of ion exchanged water and emulsified was used. After the dropwise addition of the monomer emulsion was finished, the system was further maintained at 60°C for three hours, and then 0.2 parts of 35% hydrogen peroxide water and 0.6 parts of ascorbic acid were added. The system was cooled to ordinary temperature and then 10% aqueous ammonia was added to perform neutralization. In this manner, an acrylic polymer emulsion was obtained.

Respectively alone, 40 parts of rosin ester having a hydroxyl group value of 116 mg KOH/g and a viscosity of 140 Pa·s at 30°C (KE-364C, a product from Arakawa Chemical Industries, Ltd.) serving as a liquid tackifier and 2 parts of LATEMUL E-1000A (an anionic surfactant having a distyrenated phenyloxy group serving as a hydrophobic group and a terminal $SO_3NH_4$-type polyoxyethylene chain serving as a hydrophilic group), a product from Kao Corporation, serving as a surfactant, per 100 parts of acrylic polymer contained in the emulsion were added to the acrylic polymer emulsion, approximately simultaneously. At this time, the acrylic polymer emulsion and the liquid tackifier were both heated to 40°C and then mixed. Polyacrylic acid (ARON B-500, a product from Toagosei Co., Ltd.) serving as a thickener, 10% ammonium water serving as a pH adjuster and ion-exchanged water were used suitably to adjust the solid contents to 50% and viscosity to 10 Pa·s. In this way, a PSA composition A1 according to the present example was obtained. The viscosity was measured using a B-type viscometer with the conditions: rotor No. 5, rotation speed of 20 rpm, liquid temperature of 30°C and measurement time of 1 minute.

The PSA composition A1 was coated over a release liner having a release layer treated with a silicone release agent (75 EPS (M) Cream (Kai), a product from Oji Specialty Paper Co., Ltd.) and dried at 100°C for two minutes to form a PSA layer having a thickness of approximately 60 μm. Two sheets of this PSA-layered release liners were prepared, these PSA layers were respectively placed on each side of a non-woven fabric substrate (product name "SP genshi-14" from Daifuku Paper MGF Co., Ltd.) to produce a PSA sheet. Each adhesive side of this PSA sheet is protected as-is by the release liner used in producing the PSA sheet.

<Example 2>

Serving as a tackifier resin, 20 parts in NV basis of an aqueous emulsion of polymerized rosin ester having a softening point of 160°C (E-865 NT, a product from Arakawa Chemical Industries, Ltd.) per 100 parts of acrylic polymer contained in the emulsion was added to the acrylic polymer emulsion used in Example 1 and mixed. Next, respectively alone, 20 parts of terpene phenol resin having a hydroxyl group value of 155 mg KOH/g and a viscosity of 70 Pa·s at 30°C (YP-90LL, a product from Yasuhara Chemical Co., Ltd) serving as a liquid tackifier and 2 parts of LATEMUL E-1000A serving as a surfactant per 100 parts of acrylic polymer contained in the emulsion were added approximately simultaneously. At this time, the acrylic polymer emulsion and the liquid tackifier were both pre-heated to 40°C and then mixed. Similarly to Example 1, the solid content was adjusted to 50% and the viscosity to 10 Pa·s to obtain a PSA composition A2 according to the present example. This PSA composition A2 was used to prepare a PSA sheet in a similar manner to Example 1.

<Example 3>

Alternatively to the surfactant LATEMUL E-1000A that was subsequently added to the acrylic polymer emulsion in Example 2, 1.5 parts of EMULGEN A-60 (a non-ionic surfactant having a distyrenated phenyloxy group serving as a hydrophobic group and a terminal OH-type polyoxyethylene chain serving as a hydrophilic group), a product from Kao Corporation, and 0.5 parts of EMULGEN 109P (polyoxyethylene lauryl ether (non-ionic surfactant)), a product from Kao Corporation, were used. A PSA composition A3 according to the present example was obtained in a similar manner to Example 2 regarding all other points. This PSA composition A3 was used to prepare a PSA sheet in a similar manner to Example 1.

<Example 4>

Except for the point of adding no liquid tackifier, a PSA composition A4 according to the present example was obtained in a similar manner to Example 2. This PSA composition A4 was used to prepare a PSA sheet in a similar manner to Example 1.

<Example 5>

Except for the point of subsequently adding no surfactant to the acrylic polymer emulsion, a PSA composition A5 according to the present example was obtained in a similar manner to Example 1. This PSA composition A5 was used to prepare a PSA sheet in a similar manner to Example 1.

<Example 6>

Except for the point of subsequently adding no surfactant to the acrylic polymer emulsion, a PSA composition A6 according to the present example was obtained in a similar manner to Example 2. This PSA composition A6 was used to prepare a PSA sheet in a similar manner to Example 1.

<Example 7>

Alternatively to the surfactant LATEMUL E-1000A that was subsequently added to the acrylic polymer emulsion in Example 2, 2 parts of HITENOL 08E (an anionic surfactant in which the hydrophobic group is an oleyl cetyloxy group) from Dai-ichi Kogyo Seiyaku Co., Ltd. was used to obtain a PSA composition A7 according to the present example. This PSA composition A7 was used to prepare a PSA sheet in a similar manner to Example 1.

<Example 8>

Alternatively to the surfactant LATEMUL E-1000A that was subsequently added to the acrylic polymer emulsion in Example 2, 2 parts of HITENOL N-17 (an anionic surfactant in which the hydrophobic group is a nonyl phenyloxy group) from Dai-ichi Kogyo Seiyaku Co., Ltd. was used to obtain a PSA composition A8 according to the present example. This PSA composition A8 was used to prepare a PSA sheet in a similar manner to Example 1.

<Example 9>

Alternatively to the surfactant LATEMUL E-1000A that was subsequently added to the acrylic polymer emulsion in Example 2, 2 parts of HITENOL LA-16 (an anionic surfactant in which the hydrophobic group is a lauryloxy group) from Dai-ichi Kogyo Seiyaku Co., Ltd. was used to obtain a PSA composition A9 according to the present example. This PSA composition A9 was used to prepare a PSA sheet in a similar manner to Example 1.

<Example 10>

Alternatively to the surfactant LATEMUL E-1000A that was subsequently added to the acrylic polymer emulsion in Example 2, 2 parts of EMULGEN 109P used in Example 3 was used to obtain a PSA composition A10 according to the present example. This PSA composition A10 was used to prepare a PSA sheet in a similar manner to Example 1.

A summary of the composition of the PSA composition prepared in each of the examples above are shown in Table 1.

[Table 1]

Table 1 (1/2)

| Composition (parts in mass) | Example 1 | Example 2 | Example 3 | Example 4 |
|---|---|---|---|---|
| Acrylic polymer | 100 | 100 | 100 | 100 |
| Liquid tackifier (hydroxyl group value, viscosity (30°C)) KE-364C (116 mg KOH/g, 140 Pa·S) YP-90LL (155mg KOH/ g, 70 Pa·S) | 40 - | - 40 | - 40 | - - |
| Tackifier resin (softening point) | | | | |

(continued)

| Composition (parts in mass) | Example 1 | Example 2 | Example 3 | Example 4 |
|---|---|---|---|---|
| E-865NT (160°C) | - | 20 | 20 | 20 |
| Surfactant (hydrophobic group/hydrophilic group) Distyrenated phenyloxy/anion | 2 | 2 | - | - |
| Distyrenated phenyloxy/non-ion | - | - | 1.5 | - |
| Oleyl cetyloxy/anion | - | - | - | - |
| Nonyl phenyloxy/anion | - | - | - | - |
| Lauryloxy/anion | - | - | - | - |
| Lauryloxy/non-ion | - | - | 0.5 | - |

Table 1 (2/2)

| Composition (parts in mass) | Example 5 | Example 6 | Example 7 | Example 8 | Example 9 | Example 10 |
|---|---|---|---|---|---|---|
| Acrylic polymer | 100 | 100 | 100 | 100 | 100 | 100 |
| Liquid tackifier (hydroxyl group value, viscosity (30°C)) KE-364C (116 mg KLOH/g, 140 Pa·S) | 40 | - | - | - | - | - |
| YP-90LL (155mg KOH/ g, 70 Pa·S) | - | 40 | 40 | 40 | 40 | 40 |
| Tackifier resin (softening point) E-865NT (160°C) | - | 20 | 20 | 20 | 20 | 20 |
| Surfactant (hydrophobic group/hydrophilic group) Distyrenated phenyloxy/ anion | - | - | - | - | - | - |
| Distyrenated phenyloxy/non-ion | - | - | - | - | - | - |
| Oleyl cetyloxy/anion | - | - | 2 | 2 | - | - |
| Nonyl phenyloxy/anion | - | - | - | - | - | - |
| Lauryloxy/anion | - | - | - | - | 2 | - |
| Lauryloxy/non-ion | - | - | - | - | - | 2 |

<Mechanical stability evaluation>

The mechanical stability of each PSA composition prepared in Examples 1 to 10 was evaluated in the following manner.

(Test conditions)

Testing device: Maron tester manufactured by Tester Sangyo Co., Ltd.
(Product name "AB-802 Maron Type Mechanical Stability Tester")
Sample amount: 50 g (50% solid contents)
Load: 10 kg
Rotation speed: 500 rpm
Test time: 5 minutes

(Method of operation)

A polyethylene liner supplied with the tester was adhered at the bottom of an aluminum container supplied with the tester, and a prescribed amount of sample was weighed. Shear was applied with the above test conditions, and then, a agglomerate generated in the sample was filtered and collected using a nylon mesh (product name " nylon sheer 80 mesh") manufactured by Yokohama Senshoku K.K. This collected substance was left alone under an environment of 25°C and 50% RH for 10 minutes and dried to determine the dry mass of the agglomerate. The amount of aggregate generation (wt%) was determined by substituting this dry mass Wc and the mass of the solid content contained in the sample (sample amount × solid content) Ws in the formula: Wc/Ws × 100.

<Measurement of light pressure-bonding adhesive strength to urethane foam>

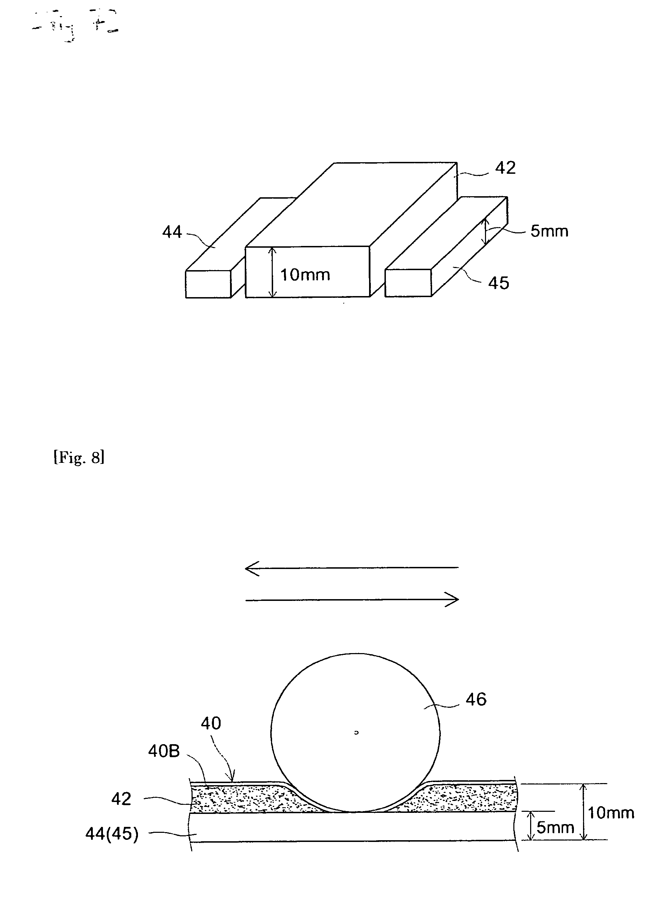

A flexible urethane foam (ECS (gray), a product from Inoac Corporation) of 10 mm in thickness cut into a size of 30 mm in width and 100 mm in length was prepared to serve as an adherend. As shown in Fig. 7, on both sides in the width direction of this urethane foam (ECS foam) 42, 5 mm-thick ALPS members (jigs for the purpose of controlling the thickness when the urethane foam is compressed; two 2.5 mm-thick ABS plates were stacked and used as 5 mm-thick jigs) 44 and 45 were placed by leaving approximately 0.1 mm gaps respectively.

Under an environment of 23°C, the release liner covering a first adhesive surface of each PSA sheet (a double-sided adhesive sheet) prepared according to Examples 1 to 10 was peeled off and a 25 μm-thick polyethylene terephthalate (PET) film was adhered to the exposed adhesive surface for backing. This backed PSA sheet cut into a size of 20 mm in width and 100 mm in length served as a sample strip. The release liner covering a second adhesive surface of the sample strip was peeled off up to a position of approximately 2/3 from one end in the length direction of the sample strip. As shown in Fig. 8, with the adhesive surface 40B thusly exposed facing down, a sample strip 40 was placed atop the urethane foam 42 and pressure-bonded by causing a roller 46 weighing 2 kg and having a diameter 85 mm to travel once back and forth in the length direction of this sample strip 40 at a speed of 30 cm/minute. At this time, the roller 46 was rolled along the top side of the jigs 44 and 45 while compressing the urethane foam 42 (thickness compression by 50% from the initial state thickness).

In this way, that is to say, pressure-bonded to urethane foam by a bonding surface area of 20 mm in width and approximately 100 mm in length, a sample strip was stored at 23°C for 30 minutes, and then, 180° peel adhesive strength was measured using a tensile tester in a measurement environment of 23°C and 50% RH, at a pull speed of 300 mm/ minute, in accordance with JIS Z 0237 (2004). The measurement length was at least 10 mm or greater. Respectively three sample strips were prepared from the PSA sheet prepared according to each example, and from the results of three measurements using these, the mean value was calculated.

<Measurement of PP adhesive strength>

Under an environment of 23°C, the release liner covering a first adhesive surface of each PSA sheet was peeled off and a 25 μm-thick PET film was adhered to the exposed adhesive surface for backing. This backed PSA sheet cut into a size of 20 mm in width and 100 mm in length served as a sample strip. The release liner covering a second adhesive surface of the sample strip was peeled off, the adhesive surface thusly exposed was pressure-bonded to polypropylene plate serving as the adherend by causing a 2kg roller to travel back and forth once. This was stored at 23°C for 30 minutes, and then, 180° peel adhesive strength was measured using a tensile tester in a measurement environment of 23°C and 50% RH, at a pull speed of 300 mm/minute, in accordance with JIS Z 0237 (2004). Three sample strips were prepared from the PSA sheet prepared according to each example, and from the results of three measurements using these sample strips, the mean value was calculated.

<Water-resistance evaluation>

In a similar manner to the measurement of PP adhesive strength described above, a sample strip was pressure-bonded to a PP plate, stored at 23°C for 30 minutes and then stored under a hot and humid environment of 40°C and 92% RH for 14 days. The sample was removed from this hot and humid environment, stored in a measurement environment of 23°C and 50% RH for a prescribed period of time, and then, the 180° peel adhesive strength was measured in a similar manner to the measurement of PP adhesive strength in the condition of 300 mm/minute pull speed. Water-resistance evaluation was carried out in the two conditions of 2 hours and 24 hours for the prescribed period of time mentioned above.

The obtained results arc shown in Table 2.

[Table 2]

Table 2 (1/2)

| Evaluation items | Example 1 | Example 2 | Example 3 | Example 4 |
|---|---|---|---|---|
| Amount of aggregate generation (wt %) | 0.0 | 0.0 | 0.3 | 0.1 |
| Urethane foam adhesive strength (N/20 mm) Light-pressure bonding (50% compression) | 2 | 4 | 4 | 0.1 |
| PP adhesive strength (N/20 mm) | 8 | 12 | 13 | 10 |
| Water-resistance (N/20 mm) 2 hours after removal 24 hours after removal | 7 8 | 11 13 | 11 16 | 11 11 |

Table 2 (2/2)

| Evaluation items | Example 5 | Example 6 | Example 7 | Example 8 | Example 9 | Example 10 |
|---|---|---|---|---|---|---|
| Amount of aggregate generation (wt %) | 1.3 | 1.5 | 0.2 | 1.0 | 0.6 | 1.8 |
| Urethane foam adhesive strength (N/20 mm) Light-pressure bonding (50% compression) | 3 | 3 | 4 | 3 | 4 | 2 |
| PP adhesive strength (N/20 mm) | 15 | 10 | 14 | 10 | 12 | 11 |
| Water-resistance (N/20 mm) 2 hours after removal 24 hours after removal | 7 8 | 6 8 | 0.2 3 | 0.1 2 | 0.4 12 | 0.2 1 |

As shown in Table 2, the PSA compositions according to Examples 1 to 3 comprising a liquid tackifier having a hydroxyl group value of 100 mg KOH/g or greater and an anionic or non-ionic surfactant S provided with a phenyloxy group having at least one substituent having an aromatic ring subsequently added to a water-dispersed acrylic polymer were all found to be emulsions having low amounts of aggregate generation of 1.0% by mass or less (more concretely, less than 0.5% by mass) and excellent mechanical stability. The PSA sheets formed from these PSA compositions all had satisfactory light pressure-bonding adhesive strengths of 1.5 N/20 mm or greater to urethane foam, and in particular, light pressure-bonding adhesive strengths of 2.5 N/20 mm or greater were realized in Examples 2 and 3. In addition, the PSA compositions according to these Examples 1 to 3 had excellent water-resistance, and concretely, the PP adhesive strengths 2 hours after removal were 5.0 N/20 mm or greater (of which 10 N/20 mm or greater in Example 2 and 3) and were 50% or greater (more concretely 70% or greater, and more specifically 80% or greater) with respect to the PP adhesive strength 30 minutes after pressure-bonding.

In contrast, although Example 4, in which the PSA composition did not contain a liquid tackifier, had a small amount of aggregate generation, the light pressure-bonding adhesive strength was significantly low, at 1/10 or lower compared to Examples 1 to 3. Examples 5 and 6, in which the PSA composition contained a liquid tackifier but contained no subsequently added surfactant, had satisfactory light pressure-bonding adhesive strengths but large amounts of aggregate generation, and also a low dispersion stability (mechanical stability) of the composition. In Examples 7 to 10, in which various surfactants not corresponding to surfactant S (not provided with a phenyloxy group having a substituent having an aromatic ring) were added to the composition of Example 6, all PP adhesive strengths 2 hours after removal (water-resistances) were widely decreased.

Thusly, the present invention has been described in detail; however, the embodiments and examples described above are merely illustrative, and the invention disclosed herein includes various variants and modifications of the concrete examples described above.

**Claims**

1. A pressure-sensitive adhesive composition, comprising an aqueous dispersion solution containing an aqueous solvent and a pressure-sensitive adhesive constituent dispersed in the aqueous solvent, the pressure-sensitive adhesive constituent containing:

   an acrylic polymer;
   a tackifier L having a viscosity of 2000 Pa·s or lower at 30°C; and
   a surfactant S having in a molecular structure an aryloxy group serving as a hydrophobic group and an anionic or non-ionic hydrophilic group, where the aryloxy group is a phenyloxy group having at least one substituent having an aromatic ring.

2. The pressure-sensitive adhesive composition according to claim 1, wherein a hydroxyl group value of the tackifier L is 50 mg KOH/g or greater.

3. The pressure-sensitive adhesive composition according to claim 1 or 2, wherein a hydroxyl group value of the tackifier L is 100 to 300 mg KOH/g.

4. The pressure-sensitive adhesive composition according to any one of claims 1 to 3, wherein a viscosity of the tackifier L at 30°C is 200 Pa·s or lower.

5. The pressure-sensitive adhesive composition according to any one of claims 1 to 4, wherein the tackifier L is a terpene phenol resin of 150 to 300 mg KOH/g or a rosin ester with a hydroxyl group value of 100 to 300 mg KOH/g.

6. The pressure-sensitive adhesive composition according to any one of claims 1 to 5, containing 2 to 10 parts by mass of the surfactant S with respect to 100 parts by mass of the tackifier L.

7. A method for preparing a pressure-sensitive adhesive composition comprising a dispersion solution containing an aqueous solvent and an acrylic polymer dispersed in the aqueous solvent, comprising the steps of::

   preparing a dispersion solution in which an acrylic polymer is dispersed in an aqueous solvent; and
   mixing into the dispersion solution a tackifier L having a viscosity of 2000 Pa·s or lower at 30°C and a surfactant S having an aryloxy group serving as a hydrophobic group and an anionic or non-ionic hydrophilic group, where the aryloxy group is a phenyloxy group having at least one substituent having an aromatic ring.

8. The method according to claim 7, containing 2 to 10 parts by mass of the surfactant S with respect to 100 parts by mass of the tackifier L.

9. The method according to claim 7 or 8, wherein the tackifier L is a terpene phenol resin of 150 to 300 mg KOH/g or a rosin ester with a hydroxyl group value of 100 to 300 mg KOH/g.

10. A pressure-sensitive adhesive sheet having a pressure-sensitive adhesive layer formed from the pressure-sensitive adhesive composition according to claim 1.

**Patentansprüche**

1. Haftklebstoffzusammensetzung umfassend eine wässrige Dispersionslösung enthaltend ein wässriges Lösungsmittel und einen in dem wässrigen Lösungsmittel dispergierten Haftklebstoffbestandteil, wobei der Haftklebstoffbestandteil enthält:

   ein Acrylpolymer;
   einen Klebrigmacher L mit einer Viskosität von 2000 Pa·s oder weniger bei 30 °C; und
   einen oberflächenaktiven Stoff S, der in einer molekularen Struktur eine Aryloxygruppe, die als eine hydrophobe Gruppe dient, und eine anionische oder nicht ionische hydrophile Gruppe aufweist, wobei die Aryloxygruppe eine Phenyloxygruppe ist, die wenigstens einen Substituenten mit einem aromatischen Ring aufweist.

2. Haftklebstoffzusammensetzung nach Anspruch 1, wobei eine Hydroxylgruppenzahl des Klebrigmachers L 50 mg KOH/g oder mehr beträgt.

**3.** Haftklebstoffzusammensetzung nach Anspruch 1 oder 2, wobei eine Hydroxylgruppenzahl des Klebrigmachers L 100 bis 300 mg KOH/g beträgt.

**4.** Haftklebstoffzusammensetzung nach einem der Ansprüche 1 bis 3, wobei eine Viskosität des Klebrigmachers L bei 30 °C 200 Pa·s oder weniger beträgt.

**5.** Haftklebstoffzusammensetzung nach einem der Ansprüche 1 bis 4, wobei der Klebrigmacher L ein Terpenphenolharz von 150 bis 300 mg KOH/g oder ein Kolophoniumester mit einer Hydroxylgruppenzahl von 100 bis 300 mg KOH/g ist.

**6.** Haftklebstoffzusammensetzung nach einem der Ansprüche 1 bis 5, enthaltend 2 bis 10 Massenteile des oberflächenaktiven Stoffes S bezogen auf 100 Massenteile des Klebrigmachers L.

**7.** Verfahren zum Herstellen einer Haftklebstoffzusammensetzung umfassend eine Dispersionslösung enthaltend ein wässriges Lösungsmittel und ein in dem wässrigen Lösungsmittel dispergiertes Acrylpolymer, umfassend die Schritte:

das Herstellen einer Dispersionslösung, in welcher ein Acrylpolymer in einem wässrigen Lösungsmittel dispergiert ist; und
das Hineinmischen eines Klebrigmachers L mit einer Viskosität von 2000 Pa·s oder weniger bei 30 °C und eines oberflächenaktiven Stoffes S, der eine Aryloxygruppe, die als hydrophobe Gruppe dient, und eine anionische oder nicht ionische hydrophile Gruppe aufweist, in die Dispersion, wobei die Aryloxygruppe eine Phenyloxygruppe ist, die wenigstens einen Substituenten mit einem aromatischen Ring aufweist.

**8.** Verfahren nach Anspruch 7, enthaltend 2 bis 10 Massenteile des oberflächenaktiven Stoffes S bezogen auf 100 Massenteile des Klebrigmachers L.

**9.** Verfahren nach Anspruch 7 oder 8, wobei der Klebrigmacher L ein Terpenphenolharz von 150 bis 300 mg KOH/g oder ein Kolophoniumester mit einer Hydroxylgruppenzahl von 100 bis 300 mg KOH/g ist.

**10.** Haftklebefolie mit einer Haftklebstoffschicht, die aus der Haftklebstoffzusammensetzung nach Anspruch 1 gebildet ist.

**Revendications**

**1.** Composition adhésive sensible à la pression, comprenant une solution de dispersion aqueuse contenant un solvant aqueux et un constituant adhésif sensible à la pression dispersé dans le solvant aqueux,
le constituant adhésif sensible à la pression contenant :

un polymère acrylique ;
un agent poisseux L présentant une viscosité inférieure ou égale à 2 000 Pa.s à 30 °C ; et
un tensio-actif S possédant, dans une structure moléculaire, un groupe aryloxy servant de groupe hydrophobe et un groupe hydrophile anionique ou non ionique, où le groupe aryloxy est un groupe phényloxy présentant au moins un substituant possédant un noyau aromatique.

**2.** Composition adhésive sensible à la pression selon la revendication 1, dans laquelle une valeur de groupe hydroxyle de l'agent poisseux L est supérieure ou égale à 50 mg de KOH/g.

**3.** Composition adhésive sensible à la pression selon la revendication 1 ou 2, dans laquelle une valeur de groupe hydroxyle de l'agent poisseux L est de 100 à 300 mg de KOH/g.

**4.** Composition adhésive sensible à la pression selon l'une quelconque des revendications 1 à 3, dans laquelle une viscosité de l'agent poisseux L à 30 °C est inférieure ou égale à 200 Pa.s.

**5.** Composition adhésive sensible à la pression selon l'une quelconque des revendications 1 à 4, dans laquelle l'agent poisseux L est une résine phénolique de terpène de 150 à 300 mg de KOH/g ou un ester de colophane avec une valeur de groupe hydroxyle de 100 à 300 mg de KOH/g.

6. Composition adhésive sensible à la pression selon l'une quelconque des revendications 1 à 5, contenant de 2 à 10 parties en masse du tensio-actif S par rapport à 100 parties en masse de l'agent poisseux L.

7. Procédé pour préparer une composition adhésive sensible à la pression comprenant une solution de dispersion contenant un solvant aqueux et un polymère acrylique dispersé dans le solvant aqueux, comprenant les étapes :

de préparation d'une solution de dispersion dans laquelle un polymère acrylique est dispersé dans un solvant aqueux ; et
de mélange, dans la solution de dispersion, d'un agent poisseux L présentant une viscosité inférieure ou égale à 2 000 Pa.s à 30 °C et d'un tensio-actif S possédant un groupe aryloxy servant de groupe hydrophobe et un groupe hydrophile anionique ou non ionique, où le groupe aryloxy est un groupe phényloxy présentant au moins un substituant possédant un noyau aromatique.

8. Procédé selon la revendication 7, contenant de 2 à 10 parties en masse du tensio-actif S par rapport à 100 parties en masse de l'agent poisseux L.

9. Procédé selon la revendication 7 ou 8, dans lequel l'agent poisseux L est une résine phénolique de terpène de 150 à 300 mg de KOH/g ou un ester de colophane avec une valeur de groupe hydroxyle de 100 à 300 mg de KOH/g.

10. Feuille adhésive sensible à la pression possédant une couche adhésive sensible à la pression formée à partir de la composition adhésive sensible à la pression selon la revendication 1.

[Fig. 1]

1

32
22
10
21
31

[Fig. 2]

2

22
10
21
31

[Fig. 3]

[Fig. 4]

[Fig. 5]

5

21A — / 31
10A — / 21
/ 10

[Fig. 6]

6

21B —
10A — / 21
/ 10
10B —

[Fig. 7]

[Fig. 8]

**EP 2 465 908 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010280857 A
- JP 2003238932 A
- JP 2009138167 A

### Non-patent literature cited in the description

- Handbook of Pressure-Sensitive Adhesive Technology. Nikkan Kogyo Shimbun, Ltd,
- Polymer Handbook. Wiley-Interscience